# FASCICULE DE BREVET EUROPEEN

(11) **EP 0 575 250 B1**
(45) Date de publication et mention de la délivrance du brevet: **15.05.1996**
(21) Numéro de dépôt: 93401545.4
(22) Date de dépôt: 16.06.1993
(51) Int. Cl.: F16F 13/00

(54) **Perfectionnements aux dispositifs antivibratoires hydrauliques**
Verbesserungen an vibrationsdämpfenden, hydraulischen Systemen
Improvements on anti-vibrational hydraulical systems

(30) Priorité: 19.06.1992 FR 9207513
(43) Date de publication de la demande: 22.12.1993
(73) Titulaire: HUTCHINSON, F-75008 Paris (FR)
(72) Inventeur: Bellamy, Alain, F-41100 Naveil (FR); Girard, André, F-28200 La Chapelle du Noyer (FR)
(74) Mandataire: Behaghel, Pierre

(56) Documents cités:
- EP-A- 0 409 707
- EP-A- 0 500 432
- EP-A- 0 511 907
- EP-A- 0 512 195
- FR-A- 2 554 888
- PATENT ABSTRACTS OF JAPAN vol. 013, no. 385 (M-864)25 Août 1989 & JP-01 135 940 (TOYOTA MOTOR CORP) 29 Mai 1989
- PATENT ABSTRACTS OF JAPAN vol. 015, no. 407 (M-1169)17 Octobre 1991 & JP-03 168 438 (NISSAN MOTOR CO. LTD.)

## Description

L'invention est relative aux dispositifs antivibratoires hydrauliques destinés à être interposés aux fins d'amortissement et de liaison, voire de support, entre deux éléments rigides tels qu'un châssis de véhicule et que le moteur de ce véhicule.

Elle concerne plus particuliérement, parmi ces dispositifs, ceux qui comportent :
- une armature rigide annulaire d'axe vertical et une tige rigide coaxiale à cette armature, solidarisables respectivement avec les deux éléments rigides à réunir,
- un ressort annulaire en élastomère résistant à la compression axiale, reposant sur l'armature et interposé entre celle-ci et la tige, qui le traverse,
- une membrane annulaire flexible et étanche portée par l'armature et délimitant avec celle-ci et avec un soufflet annulaire flexible et étanche une enceinte annulaire disposée au-dessus du ressort,
- une rondelle rigide adhérée à la base du soufflet et appliquée axialement en permanence contre la périphérie d'un disque solidaire de la tige et coiffant le ressort,
- une cloison rigide annulaire intermédiaire portée par l'armature s'étendant entre la membrane et le soufflet et divisant l'intérieur de l'enceinte annulaire en deux chambres, l'une inférieure de travail du côté du ressort et l'autre de compensation,
- un passage étranglé faisant communiquer en permanence les deux chambres entre elles,
- et une masse de liquide remplissant les deux chambres et le passage étranglé.

La forme annulaire de l'enceinte livre accès à une vis de fixation du disque sur la tige et à un outil de serrage de cette vis.

Comme on le sait, avec un tel dispositif, l'application sur l'armature ou la tige, selon la direction verticale, d'oscillations de relativement grande amplitude (généralement supérieure à 0,5 mm) et de relativement basse fréquence (généralement de l'ordre de 5 à 20 Hz) ont pour effet de refouler le liquide de l'une des deux chambres dans l'autre et inversement à travers le passage étranglé, avec mise en résonance de la masse liquide ainsi refoulée lorsque la fréquence desdites oscillations atteint une valeur prédéterminée qui est fonction du rapport entre la longueur axiale et la section droite du passage étranglé, cette mise en résonance assurant un excellent amortissement des oscillations concernées.

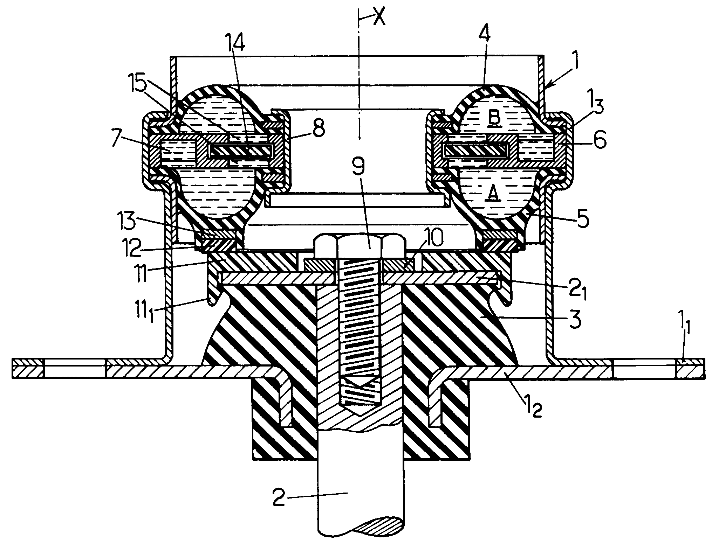

Dans les modes de réalisation connus des dispositifs antivibratoires du genre décrit ci-dessus (voir figure 2 du brevet EP-0 409 707), la rondelle rigide est noyée dans un repli du soufflet, constitué en élastomère, et appliquée axialement, avec simple interposition d'une couche d'élastomère, contre le bord du disque, alors métallique.

Un tel montage peut donner satisfaction dans certains cas.

Mais pour certaines applications, les déplacements de la tige par rapport à l'armature sont tels que l'on observe des déplacements relatifs axiaux et/ou transversaux relativement importants entre la rondelle et le bord du disque, ce qui peut être une source d'usure et de détérioration des portées en contact mutuel.

L'invention a pour but, surtout, de remédier à cet inconvénient.

A cet effet, les dispositifs antivibratoires du genre en question selon l'invention sont essentiellement caractérisés en ce que le contact entre la rondelle et la périphérie du disque est réalisé le long de portées annulaires planes transversales comprises respectivement avec cette rondelle et avec ce disque et présentant un faible coefficient de frottement, portées agencées de façon à pouvoir glisser transversalement l'une contre l'autre.

Dans des modes de réalisation préférés, on a recours en outre à l'une et/ou à l'autre des dispositions suivantes :
- les portées glissantes sont constituées en une polyamide chargée de fibres de verre,
- la polyamide ci-dessus est en outre chargée de sulfure de molybdène,
- lors du montage du dispositif, l'ensemble constitué par le ressort annulaire et par le soufflet annulaire est soumis à une précontrainte axiale de façon telle qu'un contact soit établi en permanence entre les deux portées glissantes,
- la portée glissante inférieure est disposée à la face supérieure d'une rondelle formant ledit disque et coiffant un disque rigide solidarisé avec la tête de la tige, rondelle dont la périphérie est prolongée vers le bas par des griffes propres à s'encliqueter sur la périphérie du disque rigide.

L'invention comprend, mises à part ces dispositions principales, certaines autres dispositions qui s'utilisent de préférence en même temps et dont il sera plus explicitement question ci-après.

Dans ce qui suit, l'on va décrire un mode de réalisation préféré de l'invention en se référant au dessin ci-annexé d'une manière bien entendu non limitative.

La figure unique, de ce dessin, montre en coupe axiale un dispositif antivibratoire hydraulique établi selon l'invention.

Ce dispositif comprend :
- une armature annulaire rigide 1 d'axe vertical X se présentant sous la forme générale d'un tronçon de tube dont l'extrémité inférieure est prolongée radialement vers l'extérieur par une embase annulaire 1₁,
- une tige rigide centrale 2 d'axe X,
- un ressort tronconique annulaire en élastomère 3 reposant sur une plaque perforée 1₂ qui est soudée sous l'embase 1₁, ressort interposé verticalement entre ladite plaque et un disque rigide 2₁ solidarisé avec la tête de la tige 2,
- une membrane annulaire flexible et étanche 4 supérieure et un soufflet annulaire flexible et étanche 5 inférieur montés tous les deux de façon étanche sur l'armature 1, à l'intérieur de la portion supérieure de celle-ci, de manière à former ensemble une enceinte annulaire étanche,
- une cloison intermédiaire rigide 6 portée par l'armature 1, s'étendant entre la membrane 4 et le soufflet 5 et divisant l'intérieur de l'enceinte annulaire en deux chambres annulaires, l'une inférieure A, de travail, et l'autre supérieure B, de compensation,
- un passage étranglé 7 évidé dans la cloison 6 et reliant en permanence les deux chambres A et B,
- et une masse de liquide remplissant les deux chambres A et B et le passage étranglé 7.

Les bords intérieurs annulaires de la membrane 4, du soufflet 5 et de la cloison 6, sont sertis par une bague centrale 8.

Cette bague 8 est propre à livrer passage à une vis 9 de fixation du disque 2₁ sur la tige 2, avec interposition d'une rondelle 10 entre la tête de cette vis et ledit disque 2₁.

On voit également sur le dessin que les bords extérieurs de la membrane 4, du soufflet 5 et de la cloison intermédiaire 6, sont sertis les uns sur les autres par une portion 1₃ déformée à cet effet de l'armature 1.

L'armature 1 et la tige 2 sont solidarisés respectivement avec les deux pièces entre lesquelles on désire éviter le transfert de vibrations ou oscillations : dans les modes de réalisation préférés, l'armature 1 est montée sur la carrosserie d'un véhicule et la tige 2 sur le moteur de ce véhicule, alors suspendu inférieurement.

La présente invention concerne plus particulièrement la manière dont est établi le contact entre la base du soufflet 5 et la périphérie du disque 2₁.

On prévoit à cet effet :
- d'une part, coiffant la périphérie du disque 2₁, une première rondelle 11 relativement large et épaisse,
- et, d'autre part, insérée dans une gorge annulaire ouverte vers le bas du soufflet 5, une seconde rondelle 12 plus étroite et plus mince que la première, épaulée de préférence par une troisième rondelle métallique 13 logée au fond de ladite gorge.

L'ensemble est soumis, lors de son montage, à une précontrainte axiale suffisante pour que les deux rondelles 11 et 12 soient en permanence appliquées l'une contre l'autre selon la direction de l'axe X tout en pouvant glisser librement l'une par rapport à l'autre selon les directions transversales.

Ces deux rondelles sont constituées, au moins au niveau de leurs surfaces en contact mutuel, en un matériau présentant à la fois un faible coefficient de frottement et une bonne résistance à l'usure.

Ce matériau est avantageusement une polyamide chargée de fibres de verre et, de préférence en outre, de bisulfure de molybdène.

Dans ces conditions, toutes celles, des sollicitations relatives de la tige 2 par rapport à l'armature 1 ou inversement, qui présentent une composante transversale, engendrent un glissement transversal relatif avec très peu de frottement entre les deux rondelles 11 et 12 appliquées l'une contre l'autre, ce qui supprime automatiquement tous risques d'usure ou détérioration du support dans la zone de raccordement comprise entre le ressort 3 et le soufflet 5.

Cette suppression est d'autant plus opportune que la zone en question est pratiquement inaccessible de l'extérieur du support et se prête donc mal à des réparations.

Pour faciliter le montage de la rondelle 11 sur le disque 2₁, on prolonge avantageusment vers le bas la périphérie de cette rondelle par des griffes 11₁ propres à s'accrocher automatiquement, par encliquetage, sur la périphérie dudit disque, à la fin de la mise en place de la rondelle sur le disque par emboîtement vertical.

Sur le dessin on voit encore en 14 un "clapet" annulaire monté de façon à pouvoir vibrer avec une amplitude limitée -généralement inférieure à 1 mm- entre deux couronnes de lumières 15 faisant communiquer entre elles les deux chambres A et B : comme on le sait, les vibrations de ce clapet, dit "de découplage" permettent d'absorber les vibrations de relativent basse amplitude et relativement haute fréquence, transmises entre les pièces 1 et 2.

En suite de quoi, et quel que soit le mode de réalisation adopté, on obtient finalement un dispositif antivibratoire hydraulique dont la constitution, le fonctionnement et les avantages résultent suffisamment de ce qui précède.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes.

## Revendications

1. Dispositif antivibratoire hydraulique comportant une armature rigide annulaire (1) d'axe vertical et une tige rigide (2) coaxiale à cette armature, un ressort annulaire en élastomère (3) résistant à la compression axiale, reposant sur l'armature (1) et interposé entre celle-ci et la tige, qui le traverse, une membrane annulaire flexible et étanche (4) portée par l'armature (1) et délimitant avec celle-ci et avec un soufflet annulaire flexible et étanche (5) une enceinte annulaire disposée au-dessus du ressort, une rondelle rigide (12) adhérée à la base du soufflet (5) et appliquée axialement en permanence contre la périphérie d'un disque (11) solidaire de la tige et coiffant le ressort, une cloison rigide annulaire intermédiaire (6) portée par l'armature s'étendant entre la membrane et le soufflet et divisant l'intérieur de l'enceinte annulaire en deux chambres, l'une inférieure de travail (A) du côté du ressort et l'autre de compensation (B), un passage étranglé (7) faisant communiquer en permanence les deux chambres entre elles, et une masse de liquide remplissant les deux chambres et le passage étranglé, caractérisé en ce que le contact entre la rondelle (12) et la périphérie du disque (11) est réalisé le long de portées annulaires planes transversales comprises respectivement par cette rondelle (12) et par ce disque (11) et présentant un faible coefficient de frottement, portées agencées de façon à pouvoir glisser transversalement l'une contre l'autre.

2. Dispositif antivibratoire hydraulique selon la revendication 1, caractérisé en ce que les portées glissantes (11,12) sont constituées en une polyamide chargée de fibres de verre.

3. Dispositif antivibratoire hydraulique selon la revendication 2, caractérisé en ce que la polyamide est en outre chargée de sulfure de molybdène.

4. Dispositif antivibratoire selon l'une quelconque des précédentes revendications, caractérisé en ce que, lors du montage de ce dispositif, l'ensemble constitué par le ressort annulaire (3) et par le soufflet annulaire (5) est soumis à une précontrainte axiale de façon telle qu'un contact soit établi en permanence entre les deux portées glissantes (11,12).

5. Dispositif antivibratoire selon l'une quelconque des précédentes revendications, caractérisé en ce que la portée glissante inférieure est disposée à la face supérieure d'une rondelle (11) formant ledit disque et coiffant un disque rigide (2₁) solidarisé avec la tête de la tige (2), rondelle (11) dont la périphérie est prolongée vers le bas par des griffes (11₁) propres à s'encliqueter sur la périphérie du disque rigide (2₁).

## Patentansprüche

1. Hydraulische Antischwingungseinrichtung, die aus folgenden Teilen besteht: einer starren ringförmigen Armatur (1) mit senkrecht verlaufender Achse und einer starren, koaxial zu dieser Armatur angeordneten Stange (2), einer ringförmigen Federung (3) aus elastomerem Material, die widerstandsfähig gegen axiale Druckbelastung ist, auf der Armatur (1) aufliegt und zwischen dieser und der Stange angeordnet ist, die die Federung durchdringt, einer ringförmigen biegsamen und dichten Membran (4), die durch die Armatur (1) gehalten wird und zusammen mit dieser und mit einem ringförmigen biegsamen und dichten Balg (5) einen ringförmigen Hohlraum begrenzt, der oberhalb der Federung angeordnet ist, einem starren Ring (12), der an der Basis des Balges (5) angebracht ist und in axialer Richtung dauernd gegen den Umfang einer Scheibe (11) angedrückt wird, die mit der Stange verbunden ist und die Federung abdeckt, einer starren ringförmigen Zwischenwand (6), die durch die Armatur gehalten wird, sich zwischen der Membran und dem Balg erstreckt und den Innenraum des ringförmigen Hohlraumes in zwei Kammern unterteilt, nämlich eine untere Arbeitskammer (A) auf der Seite der Federung und eine Kompensationskammer (B), einem verengten Durchgang (7), über den die beiden Kammern dauernd miteinander in Verbindung stehen, und einer flüssigen Masse, die die beiden Kammern und den verengten Durchgang ausfüllt, dadurch gekennzeichnet, daß der Kontakt zwischen dem Ring (12) und dem Umfang der Scheibe (11) längs ebener, in Querrichtung verlaufender ringförmiger Bereiche erfolgt, die von dem Ring (12) bzw. der Scheibe (11) gebildet werden und die einen geringen Reibungskoeffizienten aufweisen, wobei die Bereiche so ausgebildet sind, daß sie sich in Querrichtung gegeneinander verschieben können.

2. Hydraulische Antischwingungsvorrichtung nach Anspruch 1, dadurch gekennzeichnet, daß die Gleitbereiche (11, 12) aus einem mit Glasfasern verstärktem Polyamid bestehen.

3. Hydraulische Antischwingungsvorrichtung nach Anspruch 2, dadurch gekennzeichnet, daß das Polyamid darüber hinaus Molybdänsulfid enthält.

4. Hydraulische Antischwingungsvorrichtung nach einem der vorhergehenden Ansprüche, dadurch gekennzeichnet, daß während der Montage der Vorrichtung die aus der ringförmigen Federung (3) und dem ringförmigen Balg (5) bestehende Anordnung in axialer Richtung einer Vorspannung unterworfen wird, derart, daß zwischen den beiden Gleitbereichen (11, 12) ein ständiger Kontakt herrscht.

5. Hydraulische Antischwingungsvorrichtung nach einem der vorhergehenden Ansprüche, dadurch gekennzeichnet, daß der untere Gleitbereich an der oberen Fläche einer Ringscheibe (11) liegt, die die Scheibe bildet und eine starre Scheibe (2₁) überdeckt, die mit dem Kopf der Stange (2) verbunden ist, wobei der Umfang der Ringscheibe (11) nach unten durch Ansätze (11₁) verlängert ist, die sich am Umfang der starren Scheibe (2₁) einrasten können.

## Claims

1. Hydraulic anti-vibration device having a rigid annular frame (1) with a vertical axis and a rigid rod (2) coaxial with this frame, an annular elastomer spring (3) resisting axial compression, resting on the frame (1) and interposed between the latter and the rod, which passes through it, a flexible fluidtight annular membrane (4) carried by the frame (1) and defining, with the latter and with a flexible fluidtight annular bellows (5), an annular enclosure disposed above the spring, a rigid washer (12) bonded to the base of the bellows (5) and permanently applied axially against the periphery of a disc (11) fixed to the rod and fitting on top of the spring, a rigid intermediate annular partition (6) carried by the frame extending between the membrane and the bellows and dividing the inside of the annular enclosure into two chambers, one of them a lower working chamber (A) on the spring side and the other a compensation chamber (B), a constricted passage (7) putting the two chambers in permanent communication with each other, and a liquid mass filling the two chambers and the constricted passage, characterised in that contact between the washer (12) and the periphery of the disc (11) is effected along transverse flat annular surfaces included respectively on this washer (12) and on this disc (11) and having a low coefficient of friction, surfaces arranged so as to be able to slide transversely against each other.

2. Hydraulic anti-vibration device according to Claim 1, characterised in that the sliding surfaces (11, 12) consist of a polyamide with a glass fibre filler.

3. Hydraulic anti-vibration device according to Claim 2, characterised in that the polyamide also has a molybdenum sulphide filler.

4. Anti-Vibration device according to any one of the preceding claims, characterised in that, when this device is assembled, the assembly consisting of the annular spring (3) and annular bellows (5) is subjected to axial prestressing so that contact is permanently established between the two sliding surfaces (11, 12).

5. Anti-vibration device according to any one of the preceding claims, characterised in that the bottom sliding surface is disposed on the top face of a washer (11) forming the said disc and fitting on top of a rigid disc (2₁) fixed to the head of the rod (2), a washer (11) whose periphery is extended downwards by claws (11₁) able to snap onto the periphery of the rigid disc (2₁).
